# EUROPEAN PATENT APPLICATION

(11) **EP 4 823 160 A1**
(43) Date of publication of application: **14.10.2026**
(21) Application number: 23960839.1
(22) Date of filing: 07.12.2023
(51) Int. Cl.: H04W 24/10

(54) **TERMINAL AND MEASUREMENT METHOD**

(71) Applicant: NTT DOCOMO, INC., Chiyoda-ku Tokyo 100-6150 (JP)
(72) Inventor: SHIBAIKE, Naoya, Tokyo 100-6150 (JP); NAGATA, Satoshi, Tokyo 100-6150 (JP); PI, Qiping, Beijing 100190 (CN); WANG, Jing, Beijing 100190 (CN); LIU, Wenjia, Beijing 100190 (CN); HOU, Xiaolin, Beijing 100190 (CN); CHEN, Lan, Beijing 100190 (CN)
(74) Representative: Hoffmann Eitle
(86) International application number: PCT/JP2023/043922
(87) International publication number: WO 2025/120827

(57) **Abstract**

A terminal includes: a reception unit configured to receive, from a base station, a downlink signal to which a plurality of waveforms can be applied; a control unit configured to measure the downlink signal, to determine a waveform to be applied to the downlink signal from among the plurality of waveforms, and to generate a CSI (Channel State Information) report; and a transmission unit configured to transmit the CSI report to the base station.

## Description

### TECHNICAL FIELD

The present invention relates to a terminal and a measurement method in a wireless communication system.

### BACKGROUND ART

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" is being discussed (hereinafter, the wireless communication method is referred to as "NR"). In 5G, various wireless technologies and network architectures are being discussed to satisfy the requirements of a radio link delay of 1 ms or less while achieving throughput of 10 Gbps or more (e.g., Non-Patent Literature 1 and Non-Patent Literature 2).

In addition, various requirements for the next generation "6G" are being discussed. For example, the requirements include ultra broadband communication, mission critical communication, ultra massive connection, universal coverage, intelligent connection, ubiquitous sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as a guaranteed communication, always guaranteeing the minimum performance is being discussed.

### CITATION LIST

### Non-Patent Literature

Non-Patent Literature 1: 3GPP TS 38.300 V17.6.0 (2023-09)
Non-Patent Literature 2: 3GPP TS 38.401 V17.6.0 (2023-09)
Non-Patent Literature 3: 3GPP TS 38.331 V17.6.0 (2023-09)
Non-Patent Literature 4: 3GPP TS 38.214 V17.7.0 (2023-09)

### SUMMARY OF INVENTION

### TECHNICAL PROBLEM

In the next generation wireless communication system, in order to satisfy the requirements, a new waveform or an enhanced transmission method is expected to be supported. Accordingly, there is a possibility that a plurality of waveforms are to be used. In a case where a plurality of waveforms are used, there is a possibility that the CSI (Channel State Information) feedback parameter may be different for each of the waveforms.

The present invention has been made in view of the foregoing and is intended to perform CSI (Channel State Information) feedback in a case where a plurality of waveforms are used in the wireless communication system.

### SOLUTION TO PROBLEM

According to the disclosed technique, a terminal is provided. The terminal includes: a reception unit configured to receive, from a base station, a downlink signal to which a plurality of waveforms can be applied; a control unit configured to measure the downlink signal, to determine a waveform to be applied to the downlink signal from among the plurality of waveforms, and to generate a CSI (Channel State Information) report; and a transmission unit configured to transmit the CSI report to the base station.

### ADVANTAGEOUS EFFECTS OF INVENTION

According to the disclosed technique, CSI (Channel State Information) feedback can be performed in a case where a plurality of waveforms are used in the wireless communication system.

### BRIEF DESCRIPTION OF DRAWINGS

[Fig. 1] is a drawing illustrating a configuration example of a wireless communication system in an embodiment of the present invention.
[Fig. 2] is a sequence diagram for describing an example of CSI feedback in an embodiment of the present invention.
[Fig. 3] is a drawing for describing an example (1) of a CQI table in an embodiment of the present invention.
[Fig. 4] is a drawing for describing an example (2) of a CQI table in an embodiment of the present invention.
[Fig. 5] is a flowchart for describing an example of CSI feedback in an embodiment of the present invention.
[Fig. 6] is a drawing illustrating an example of a functional structure of a base station 10 in an embodiment of the present invention.
[Fig. 7] is a drawing illustrating an example of a functional configuration of a terminal 20 in an embodiment of the present invention.
[Fig. 8] is a drawing illustrating an example of a hardware structure of the base station 10 or the terminal 20 in an embodiment of the present invention.
[Fig. 9] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter, or the like is "configured" may mean that a predetermined value is pre-configured, or may mean that a radio parameter indicated by a base station 10 or a terminal 20 is configured.

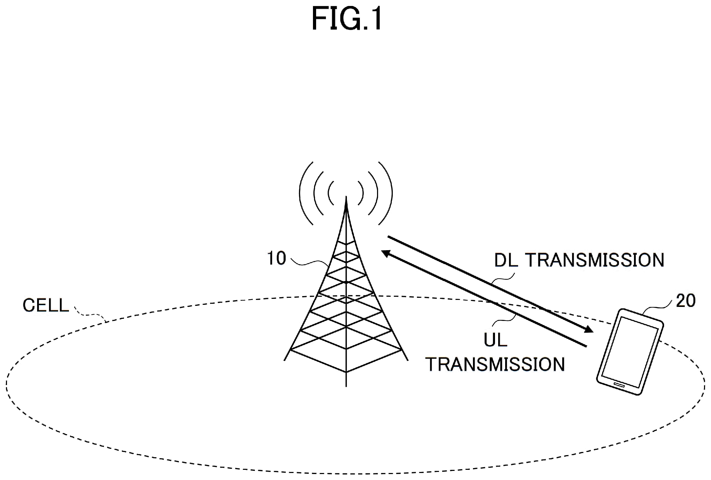

Fig. 1 is a drawing illustrating a configuration example of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example, but there may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

In addition, various requirements for the next generation "6G" are being discussed. For example, the requirements may include the ultra broadband communication, the mission critical communication, the ultra massive connection, the universal coverage, the intelligent connection, the ubiquitous sensing, and the like.

In addition, the requirements may include the ultra high speed communication, the large capacity communication, the ultra coverage enhancement, the ultra low energy consumption, the low cost, the ultra low latency, the ultra high reliability communication, the ultra many connection and sensing, and the like.

In order to satisfy the above-described requirements, as a new concept, the goals are set to be extensible (for example, capable of being effectively used in the future), easy-operational, customizable (for example, capable of being easily operational), and sustainable (for example, capable of reducing cost, capable of having a robust structure, capable of having resilience). In addition, as a guaranteed communication, always guaranteeing the minimum performance is being discussed.

Here, in the conventional technique, CP-OFDM (Cyclic Prefix OFDM) and DFT-s-OFDM (Discrete Fourier Transform - spread - OFDM) are used for the UL waveform. The default waveform for UL is CP-OFDM, and a higher layer parameter for enabling/disabling the transform precoder has been configurable in Msg3, PUSCH, CG, MsgA, DMRS for PUCCH formats 3 and 4.

With respect to the above-described higher layer parameter, there are following parameters, for example (refer to Non-Patent Literature 3).
- msg3-transformPrecoder, included in RACH-ConfigCommon. In a case where the field is absent, the UE disables the transform precoder.
- transformPrecoder, included in PUSCH-Config. In a case where the field is absent, the UE applies the value of msg3-transformPrecoder included in rach-ConfigCommon that is directly included in the BWP configuration.
- transformPrecoder, included in ConfiguredGrantConfig.
- msgA-TransformPrecoder-r16, included in MsgA-PUSCH-Config-r16.
- dmrs-UplinkTransformPrecodingPUCCH, included in PUCCH-Config. Used for DMRS for PUCCH formats 3 and 4.

In order to support two waveforms for UL, the following configurations are supported.
- DMRS-UplinkConfig
- PTRS-UplinkConfig

In addition, the dynamic waveform switching between two waveforms is supported for DG (dynamic grant) - PUSCH according to DCI indications (DCI format 0_1/0_2). The dynamic waveform switching is separately configured for each BWP in PUSCH-Config.

The transform precoding is specified to be applied to PUSCH. For example, the UE may apply the transform precoding to PUSCH that is scheduled by a RAR (Random access response) UL grant, a fallback RAR UL grant, or a DCI format 0_0 scrambled by TC-RNTI, based on the RRC parameter msg3-TransformPrecoder (refer to Non-Patent Literature 3).

For example, the UE may apply the transform precoding to MsgA PUSCH transmission based on the RRC parameter msgA-TransformPrecoder (refer to Non-Patent Literature 3). For example, the UE may apply the transform precoding, based on transformPrecoder included in the RRC parameter pusch-Config (refer to Non-Patent Literature 3) in a case where a scheduling grant is received without receiving DCI format 0_0. In addition, for example, the UE may apply the transform precoding, based on transformPrecoder included in the RRC parameter configuredGrantConfig (refer to Non-Patent Literature 3) in a case where PUSCH is transmitted according to a CG (Configured grant).

In NR, CP-OFDM and DFT-s-OFDM are supported for PUSCH. Parameter differences related to PUSCH between the two waveforms are described in the following 1) to 6), for example.
1) The maximum number of layers. The maximum number of layers for DFT-s-OFDM is one and the maximum number of layers for CP-OFDM is four or eight.
2) Modulation method. For example, π/2-BPSK (Binary Phase Shift Keying) is supported only for DFT-s-OFDM.
3) DMRS configuration type. Type-1 is supported for DFT-s-OFDM. Type-1 and Type-2 are supported for CP-OFDM.
4) Frequency resource allocation type. Type-1 and Type-2 are supported for DFT-s-OFDM. Type-0, Type-1, and Type-2 are supported for CP-OFDM.
5) DMRS/PTRS antenna port. Different DMRS/PTRS antenna port associations are applied.
6) Precoding matrix. Precoding matrixes are separately defined between CP-OFDM and DFT-s-OFDM.

In NR, DWS (Dynamic waveform switching) is supported for dynamically-scheduled PUSCH. When DWS is configured by DCI format 0_1 or 0_2, the DCI format indicates a waveform for the scheduled PUSCH. For DWS, enhanced PHR (Power headroom report) in which two types of waveforms are taken into account is implemented in order to support the base station 10 that determines the waveform for the scheduled PUSCH.

In NR, four CQI tables are defined for calculating or determining the CQI (Channel quality indicator). In the CQI tables, the modulation method, coding rate, and efficiency are defined.

In NR, a plurality of codebook types used for CSI reporting are defined for reporting the PMI (Precoding matrix indicator). The codebooks with different number of layers are separated and are defined in the corresponding different tables.

The RRC parameter CSI-ReportConfig (refer to Non-Patent Literature 3) used for configuration related to CSI reporting includes, for example, information elements codebookConfig and cqi-Table, where codebookConfig is used for configuration related to codebooks, and cqi-Table is used for CSI feedback.

As described above, the codebook configuration is included in the configuration related to CSI reporting. The codebook type, the RI (Rank indicator) restriction, and the codebook subset restriction are configured by the codebook configuration.

In a case where parameters for the MCS (Modulation and Coding Scheme) table, modulation, precoding, supported number of layers, codebook, and/or precoder, etc., are different or separated for different DL waveform types, the CSI feedback is considered to be different for different waveform assumption.

For example, when reporting the CSI feedback based on the channel estimation, the UE calculates RI, PMI, and CQI based on the channel estimation. In a case where the rank, the CQI table, the PMI codebook are different for different waveforms, the reported RI, PMI, and CQI are expected to be different even for the same channel estimation result. Therefore, the CSI feedback for the new or added DL waveform is required to be specified.

In a case where a plurality of DL waveforms are supported, the waveform type assumption for CSI feedback is required to be the same between the UE and the base station 10. In other words, the waveform type assumption for CSI reporting is required to be clarified.

The assistance information reported by the UE for supporting the PDSCH scheduling by the base station 10 is useful as the enhanced PHR reporting for DWS is useful, in a case where a plurality of waveforms (for example, CP-OFDM and DFT-s-OFDM) for DL are supported. In a case where the UE is capable of CSI reporting in which a plurality of waveforms are expected to be used, the base station 10 is expected to use the assistance information in order to determine which waveform is to be applied for scheduling PDSCH. The assistance information is useful for supporting the CSI reporting in which a plurality of waveforms are expected to be used.

Accordingly, the UE or the base station 10 may perform some of or all of the following operation 1) to operation 3).

Operation 1) supports CSI feedback for the new or added DL waveform (for example, a waveform other than DFT-s-OFDM or CP-OFDM).
Operation 1-1) defines a separated or new CQI table for the new or added DL waveform.
Operation 1-2) defines a separated or new PMI codebook for the new or added DL waveform.

Operation 2) The UE reports CSI feedback for CSI reporting with a certain report type, based on a certain DL waveform assumption.
Operation 2-1) As an operation that is not waveform-type-transparent, the UE determines to assume a certain DL waveform for CSI reporting with a certain report type. The determination may be based on the definition according to the technical specification, may be configured or indicated by the base station 10, and/or may be based on the pre-defined specification.
Operation 2-2) The UE determines parameters, tables, and/or entries for CSI reporting based on the assumed DL waveform (may be determined based on operation 2-1) and determines at least one of RI, PMI, CQI, or LI (Layer indicator) by using the determined parameters. The parameters, tables, and/or entries may mean, for example, CQI tables, and/or CQI entries, and/or codebook configurations (for example, RI values and/or codebook subset restrictions), and/or CSI reporting modes, etc.

Operation 3) The UE reports CSI feedback for CSI reporting with a certain report type, based on assumption of a plurality of waveforms.
Operation 3-1) The UE reports CSI feedback including the report type results (for example, RI, PMI, CQI, and/or LI) for the plurality of DL waveforms.
Operation 3-2) The UE calculates or determines the report type results (for example, RI, PMI, CQI, and/or LI), based on the assumption of the plurality of DL waveforms. The UE selects the report type results (for example, RI, PMI, CQI, and/or LI) for one DL waveform to report.

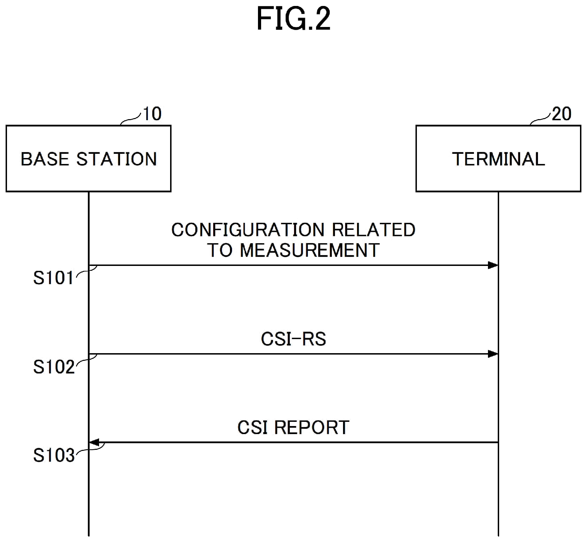

Fig. 2 is a sequence diagram for describing an example of CSI feedback in an embodiment of the present invention. In step S101, the base station 10 transmits a configuration related to measurement to the terminal 20. In step S102, the base station 10 transmits a signal that at least includes PDSCH and CSI-RS to the terminal 20. In step S103, the terminal 20 transmits a CSI report based on the measurement result to the base station 10.

Hereinafter, "operation 1) supports CSI feedback for the new or added DL waveform (for example, a waveform other than DFT-s-OFDM or CP-OFDM)" will be described.

### Operation 1-1) defines a separated or new CQI table for the new or added DL waveform.

One or a plurality of new or separated CQI tables may be defined or implemented for the new or added DL waveform.

The new CQI tables at least include a modulation method for the new or added DL waveform. For example, one of, a part of, or all of the modulation methods described in the following 1) to 3) may be supported.
1) π/2-BPSK (may be for DFT-s-OFDM), and/or other low PAPR (Peak-to-average power ratio) modulation methods, for example, APSK (Amplitude phase shift keying), π/4-QPSK (Quadrature phase shift keying), alpha*phi-BPSK, alpha*phi-QPSK, etc.
2) Conventional DL modulation method. For example, QPSK, 16QAM (Quadrature amplitude modulation), 64QAM, 256QAM, and/or 1024QAM, etc.
3) New modulation method with even higher order. For example, 2048QAM, and/or 4096QAM, etc.

A new CQI table at least including spectral efficiency may be supported for a new or added DL waveform. For example, the supported code rate may include one of, a part of, or all of the following 1) to 3).
1) Spectral efficiency value lower than 0.0586.
2) Existing spectral efficiency values. For example, the spectral efficiency values from 0.0586 to 9.2578.
3) Spectral efficiency value larger than 9.2578.

Table 1 is an example of a new CQI table for DFT-s-OFDM that supports π/2-BPSK.

**[Table 1]**

| CQI index | modulation | code rate x 1024 | efficiency |
|---|---|---|---|
| 0 | out of range | | |
| 1 | π/2-BPSK | N (1) | X (1) |
| 2 | π/2-BPSK | N (2) | X (2) |
| 3 | QPSK | 30 | 0.0586 |
| 4 | QPSK | 40 | 0.0781 |
| ...... | ...... | ...... | ...... |
| ...... | ...... | ...... | ...... |

It is to be noted that the new CQI table may be for DFT-s-OFDM, may be for CP-OFDM, or may be for other waveforms.

In addition, a certain existing CQI table for CP-OFDM (for example, refer to Non-Patent Literature 4, section 5.2.2.1 Table 5.2.2.1-2 to Table 5.2.2.1-5) may be applicable for a new or added DL waveform (a waveform other than DFT-s-OFDM or CP-OFDM).

In addition, the modulation method, code rate, and spectral efficiency of a new or added CQI table for DL waveform (refer to Non-Patent Literature 4, section 5.2.2.1) may be applied to an MCS table (refer to Non-Patent Literature 4, section 5.1.3.2).

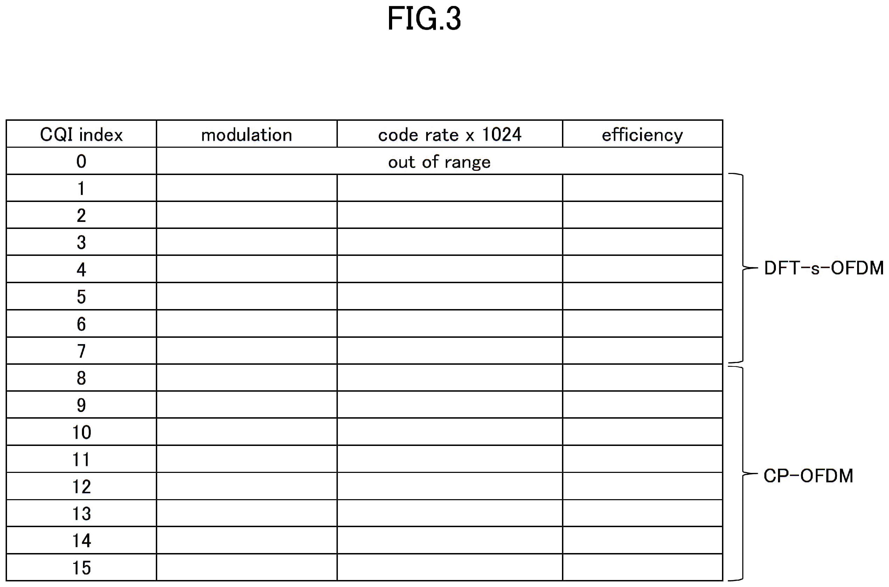

In addition, an enhanced CQI table including entries for different or a plurality of waveforms may be implemented. Fig. 3 is a drawing for describing an example (1) of a CQI table in an embodiment of the present invention. As illustrated in Fig. 3, different rows of the enhanced CQI table may correspond to different waveforms. For example, the rows from row #0 to row n0 may be for CP-OFDM, and the rows from row #n0+1 to row #n1 may be for DFT-s-OFDM. For example, the rows from row #0 to row n0 may be for DFT-s-OFDM, and the rows from row #n0+1 to row #n1 may be for CP-OFDM.

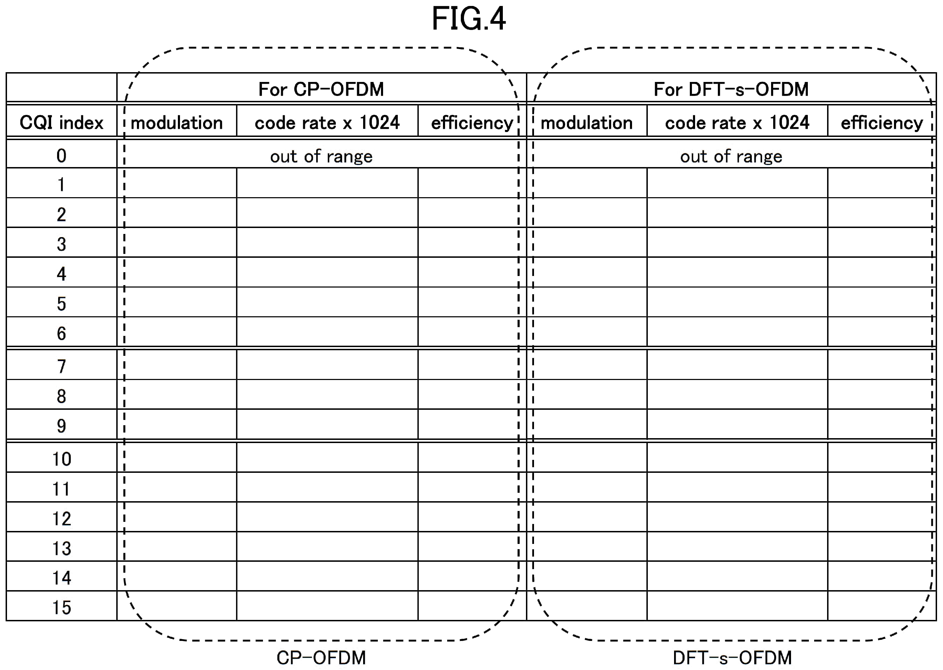

Fig. 4 is a drawing for describing an example (2) of a CQI table in an embodiment of the present invention. As illustrated in Fig. 4, different waveforms (for example, CP-OFDM and DFT-s-OFDM) may correspond to different columns of the enhanced CQI table.

The CQI table for the new or added DL waveform (for example, a waveform other than DFT-s-OFDM or CP-OFDM) may be defined by a subset of CQI tables or entries included in the CQI table for CP-OFDM.

### Operation 1-2) defines a separated or new PMI codebook for the new or added DL waveform.

A different codebook is needed for a different waveform in order to satisfy requirements related to PAPR characteristics, for example. A separated or new PMI codebook table may be defined or implemented for a new or added DL waveform. The new PMI codebook may include one of, a part of, or all of the following 1) to 6).
1) Type-1 single panel codebook and/or 1 multi-panel codebook
2) Type-2 codebook and/or Type-2 port selection codebook
3) Enhanced Type-2 codebook and/or enhanced Type-2 port selection codebook
4) Further enhanced Type-2 port selection codebook
5) CJT (Coherent joint transmission) CSI codebook
6) Doppler CSI codebook

The rank for the separated PMI codebook table may include the following 1) and/or 2).
1) A separated PMI codebook for the new or added DL waveform may be implemented at least for rank=1.
2) A separated PMI codebook for the new or added DL waveform may be implemented for rank>1. The rank may depend on whether or not multi-layer is supported for the new or added DL waveform. For example, when multi-layer DFT-s-OFDM is supported, a codebook for multi-layer DFT-s-OFDM may be defined.

According to the above-described operation 1), a CQI table and a PMI codebook can be defined for the new or added DL waveform.

Hereinafter, "operation 2) the UE reports CSI feedback for CSI reporting with a certain report type, based on a certain DL waveform assumption" will be described.

The UE may report CSI feedback for CSI reporting with a certain report type, based on a ceratin DL waveform assumption. The CSI reporting with a certain report type may include a CSI report in which one of, a part of, or all of cri-RI-PMI-CQI, cri-RI-i1, cri-RI-i1-CQI, cri-RI-CQI, and cri-RI-LI-PMI-CQI is (are) configured in reportQuantity (refer to Non-Patent Literature 3) .

Which DL waveform is to be assumed for CSI reporting may be transparent for the UE. For example, a CQI table and codebook configuration (for example, RI restriction and codebook subset restriction) included in a CSI report configuration may be for a certain waveform type.

For example, the base station 10 may include the CQI table and codebook configuration that can be applied to DFT-s-OFDM in the CSI report configuration. In this way, the legacy technical specification can be reused.

Operation 2-1) As an operation that is not waveform-type-transparent, the UE determines to assume a certain DL waveform for CSI reporting with a certain report type. The determination may be based on the definition according to the technical specification, may be configured or indicated by the base station 10, and/or may be based on the pre-defined specification.

For example, the UE may or may not report the determined waveform in the CSI reporting.

The DL waveform type for the CSI feedback or the default DL waveform type may be defined in the technical specification. For example, DFT-s-OFDM or CP-OFDM may be the default waveform type. In this way, the legacy configuration related to the CSI reporting can be reused.

The DL waveform assumption for CSI feedback may be indicated or configured by the base station 10.

For example, the DL waveform assumption for CSI feedback may be explicitly indicated by RRC signaling. For example, the RRC signaling may be a DL waveform configuration in pdsch-Config, or may be a DL waveform type that is configured for each CSI report configuration (for example, CSI-ReportConfig).

For example, the RRC signaling may be a DL waveform type that is configured for the associated codebook configuration, and may be an RRC parameter indicating the waveform included in CodebookConfig, for example.

For example, the RRC signaling may be a DL waveform type that is associated with the CSI-RS resource or resource set, and may be an RRC parameter indicating the waveform included in the CSI-RS resource or resource set configuration, for example.

In a case where two or more of the above-described three RRC signaling are configured, the UE is not required to expect that a different waveform is to be indicated. For example, the UE may expect that the waveforms indicated by a CSI report configuration, an associated codebook configuration, and an associated CSI-RS resource or resource set are to be the same.

In addition, the DL waveform assumption may be implicitly indicated by the configured CQI table and/or codebook configuration (for example, RI value and/or codebook subset restriction, etc.) included in the CSI report configuration.

In a case where a CQI table that is supported only for or applied only to a certain DL waveform (for example, CP-OFDM or DFT-s-OFDM) is configured, the corresponding DL waveform may be assumed to be used for the CSI feedback.

In a case where a codebook type, RI, and/or a codebook subset that are/is supported only for or applied only to a certain DL waveform (for example, CP-OFDM or DFT-s-OFDM) is configured, the corresponding DL waveform may be assumed to be used for the CSI feedback.

The DL waveform assumption may be indicated by DCI or MAC-CE activating the CSI reporting. For example, the DL waveform assumption may be directly indicated by DCI or MAC-CE activating the CSI reporting. For example, the DL waveform assumption may be indicated by a new field or by reusing or reinterpreting the existing field. The DL waveform assumption may be implicitly indicated by the format of DCI activating the CSI reporting.

In addition, the DL waveform type may be determined based on the pre-defined specification. For example, a waveform that is applied to the most recent PDSCH reception in which one of, a part of, or all of the following conditions is/are fulfilled may be used for the CSI feedback.

- DG-PDSCH that is scheduled by a predetermined DCI format.
- SPS-PDSCH that is activated by a predetermined DCI format.
- PDSCH whose starting or ending symbol is located at X symbols, X slots, X subframes, or X frames before the starting or ending symbol of PUSCH or PUCCH carrying the CSI report.
- PDSCH whose starting or ending symbol is located at X symbols, X slots, X subframes, or X frames before or after the starting or ending symbol of DCI or MAC-CE activating the reference CSI resource or CSI report configuration.

A waveform may be used for the CSI feedback in a case where the waveform is a waveform that is indicated by the most recent DL grant PDCCH used for waveform indication and where one of, a part of, or all of the following conditions is/are fulfilled.

- A predetermined DCI format
- PDCCH whose starting or ending symbol is located at X symbols, X slots, X subframes, or X frames before the starting or ending symbol of PUSCH or PUCCH carrying the CSI report.
- PDCCH whose starting or ending symbol is located at X symbols, X slots, X subframes, or X frames before or after the starting or ending symbol of DCI or MAC-CE activating the reference CSI resource or CSI report configuration.

Operation 2-2) The UE determines parameters, tables, and/or entries for CSI reporting based on the assumed DL waveform (may be determined based on operation 2-1) and determines at least one of RI, PMI, CQI, or LI (Layer indicator) by using the determined parameters. The parameters, tables, and/or entries may mean, for example, CQI tables, and/or CQI entries, and/or codebook configurations (for example, RI values and/or codebook subset restrictions), and/or CSI reporting modes, etc.

For example, a set of parameters that are configured for the CSI report may be configured. For example, the parameters may include any one of the CQI table, codebook configuration, and CSI reporting mode. The UE may determine one of, a part of, or all of the CQI table, entry, RI value restriction, codebook subset restriction, and codebook mode, based on the determined waveform type.

With respect to the CQI table configuration, the UE may operate as described in the following 1) or 2).
1) In a case where separate CQI tables are defined in the technical specification for different waveforms, that is, in a case where different sets of CQI tables are defined for different waveforms, the UE may expect that the configured CSI report configuration is applicable for the determined waveform type.
2) In a case where one or each CQI table can be applied for a plurality of waveform types, that is, in a case where different entry sets are applicable for different waveform types, the UE may expect that only the corresponding entry set is applicable for the determined waveform type. In other words, entries in the configured CQI table other than the corresponding entry set are not expected to be applicable for the determined waveform type. For example, in a case where the assumed waveform type is DFT-s-OFDM, the UE may apply only the corresponding entry set to DFT-s-OFDM. For example, in a case where the assumed waveform type is CP-OFDM, the UE may apply only the corresponding entry set to CP-OFDM.

In a case where the RI value restriction is configured, the UE may use an RI value in the configured RI value set and may apply the RI value to the determined waveform type. In other words, RI values other than the configured RI value may be not applicable for the determined waveform type. For example, in a case where the assumed waveform type is DFT-s-OFDM, the UE may apply only the configured RI set to DFT-s-OFDM. For example, in a case where the assumed waveform type is CP-OFDM, the UE may apply only the configured RI set to CP-OFDM.

In a case where the codebook subset restriction is configured, the UE may operate as described on the following 1) or 2).
1) In a case where separate codebook tables are defined for different waveforms for a certain codebook type and/or codebook mode, the UE may interpret the PMI codebook subset restriction by using the codebook table defined for the determined DL waveform.
2) In a case where no separate codebook table is defined for different waveforms, for example, in a case where a different codebook/PMI index set in the codebook table is applicable for the determined DL waveform, the UE may use only the codebook/PMI index in the configured codebook subset restriction for the determined DL waveform. In other words, codebooks/PMI indexes other than the codebook/PMI index in the configured codebook subset restriction may be not applicable for the determined waveform.

The UE may determine the CQI table and/or codebook configuration (for example, RI restriction and/or codebook set restriction) as in legacy NR without information related to the determined waveform assumption. The UE may expect that the determined CQI table and/or RI values and/or codebook subset restrictions and/or codebook type mode are to be applicable for the determined waveform type.

For example, a plurality of sets of parameters that are configured for the CSI report may be configured. For example, the parameters may include any one of the CQI table, codebook configuration, and CSI reporting mode. The UE may determine one of, a part of, or all of the CQI table, entry, RI value restriction, codebook subset restriction, and codebook mode, based on the determined waveform type.

With respect to the CQI table configuration, the UE may operate as described in the following 1) or 2).
1) In a case where separate CQI tables are defined in the technical specification for different waveforms, that is, in a case where different sets of CQI tables are defined for different waveforms, the UE may expect that the configured CSI report configuration is applicable for the corresponding waveform type.
2) In a case where one or each CQI table can be applied for a plurality of waveform types, that is, in a case where different entry sets are applicable for different waveform types, the UE may expect that only the entry set is applicable for the corresponding waveform type. In other words, entries in the configured CQI table other than the corresponding entry set are not expected to be applicable for the determined waveform type.

In a case where the RI value restriction is configured, the UE may expect that an RI value in the configured RI value set can be applicable or supported for the corresponding waveform type.

In a case where the codebook subset restriction is configured, the UE may operate as described in the following 1) or 2).
1) In a case where separate codebook tables are defined for different waveforms for a certain codebook type and/or codebook mode, the UE may interpret the PMI codebook subset restriction by using the codebook table defined for the corresponding DL waveform.
2) In a case where no separate codebook table is defined for different waveforms, for example, in a case where a different codebook/PMI index set in the codebook table is applicable for the corresponding DL waveform, the UE may use only the codebook/PMI index in the configured codebook subset restriction for the corresponding DL waveform. In other words, codebooks/PMI indexes other than the codebook/PMI index in the configured codebook subset restriction may be not applicable for the determined waveform.

In a case where the codebook type mode is configured, the UE may expect that the codebook type mode in the set can be applicable or supported for the corresponding waveform.

According to the above-described operation 2), a CQI table and a PMI codebook can be defined for the new or added DL waveform.

Hereinafter, "operation 3) The UE reports CSI feedback for CSI reporting with a certain report type, based on assumption of a plurality of waveforms" will be described.

### Operation 3-1) The UE reports CSI feedback including the report type results (for example, RI, PMI, CQI, and/or LI) for the plurality of DL waveforms.

The UE may calculate or determine RI, PMI, CQI, and/or LI for each configured or supported DL waveform, based on the DL waveform. The UE may calculate or determine the RI and/or PMI and/or CQI and/or LI, based on the number of layers and/or MCS table and/or CQI table and/or codebook defined for the DL waveform.

The UE may report the CSI feedback including a plurality of sets of report type results (for example, results of RI, PMI, CQI, and LI), and each set may correspond to one DL waveform.

For example, CSI part 1 may include solely information of one waveform type. The report type results for a certain waveform type (for example, results of RI, PMI, CQI, and LI) may be built in the same manner as in the legacy manner. In other words, a certain report type result may be included in CSI part 1, and a certain report type result may be included in CSI part 2.

For example, report type results for waveform types other than the certain waveform type (for example, results of RI, PMI, CQI, and LI) may be all included in CSI part 2.

The certain waveform type may be defined by the technical specification, may be configured or indicated by the base station 10, or may be included in CSI and reported. For example, CSI part 1 may include a waveform indicator with added X bits in order to indicate the certain waveform type.

In addition, for example, CSI part 1 may include a plurality of waveform type information items. A plurality of waveform type information items may be included in CSI part 1 based on the legacy NR technical specification, and a plurality of waveform type information items may be included in CSI part 2 based on the legacy NR technical specification. The order of waveforms in CSI may be defined by the technical specification, may be configured or indicated by the base station 10, or may be reported by being included in CSI. For example, CSI part 1 may include a waveform indicator with added X bits in order to indicate the certain waveform type.

For example, the UE may calculate or determine at least one of RI, PMI, CQI, or LI, based on at least one of the supported number of layers, MCS tables, CQI tables, or codebooks defined for CP-OFDM. In addition, the UE may calculate or determine at least one of RI, PMI, CQI, or LI, based on at least one of the number of supported layers, MCS tables, CQI tables, or codebooks defined for DFT-s-OFDM. CP-OFDM is referred to as the first waveform, DFT-s-OFDM is referred to as the second waveform.

As a first example, CSI part 1 may include RI and CQI for the first CW (codeword) for the first waveform, and CSI part 2 may include PMI, LI, and CQI for the second CW for the first waveform and RI, PMI, LI, and CQI for the first waveform.

As a second example, CSI part may include RI and CQI for the first CW for the first waveform and RI and CQI for the first CW for the second waveform, and CSI part 2 may include PMI, LI, and CQI for the second CW for the first waveform and PMI, LI, and CQI for the second CW for the second waveform.

In the above-described first example and the above-described second example, the absolute value of the CQI index may be reported for the CQI report for the second waveform, or a differential CQI that is a value relative to the first waveform may be reported.
Operation 3-2) The UE calculates or determines the report type results (for example, RI, PMI, CQI, and/or LI), based on the assumption of the plurality of DL waveforms. The UE selects the report type results (for example, RI, PMI, CQI, and/or LI) for one DL waveform to report.

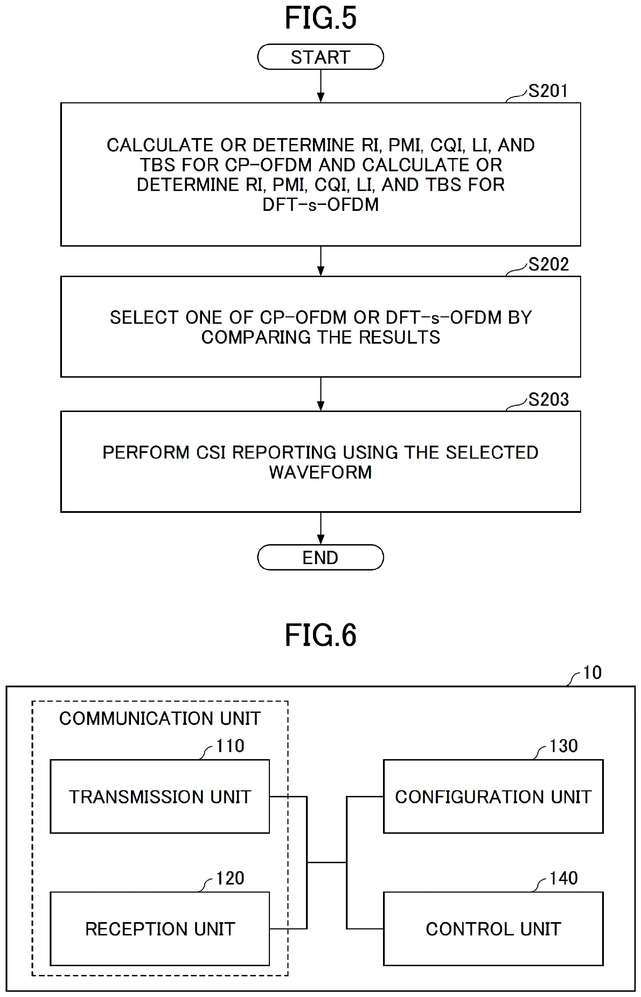

Fig. 5 is a flowchart for describing an example of CSI feedback in an embodiment of the present invention. In step S201, the UE calculates or determines RI, PMI, CQI, LI, and TBS for CP-OFDM, and calculates or determines RI, PMI, CQI, LI, and TBS for DFT-s-OFDM. In step S202, the UE selects one of CP-OFDM or DFT-s-OFDM by comparing the results. In step S203, the UE performs CSI reporting using the selected waveform.

For example, the UE may calculate or determine RI and/or PMI and/or CQI and/or LI and/or TBS for each configured or supported DL waveform, based on the supported number of layers and/or MCS tables and/or CQI tables and/or codebooks defined for the DL waveform.

For example, the UE may select one DL waveform from among the plurality of DL waveforms based on the results of calculated or determined RI and/or PMI and/or CQI and/or LI and/or TBS.

For example, the UE may select one DL waveform from among the plurality of DL waveforms based on a certain specification. For example, the UE may select a DL waveform whose corresponding TBS is larger, a DL waveform whose corresponding TBS is smaller, a DL waveform whose spectral efficiency is higher, a DL waveform whose spectral efficiency is lower, a DL waveform whose code rate is higher, a DL waveform whose code rate is lower, a DL waveform whose rank is higher, or a DL waveform whose rank is lower.

For example, the UE may randomly select one DL waveform from among the DL waveforms whose corresponding TBS and/or spectral efficiency and/or code rate and/or rank and/or layer result exceeds a certain threshold value (or does not exceed a certain threshold value).

The UE may report the report type results for the selected DL waveform (for example, RI, PMI, CQI, and/or LI) by including the results in the CSI report. The UE may include the information indicating the selected DL waveform in the CSI report by including the information in CSI part 1.

The above-described operation 3), operation 3-1), and operation 3-2) may be used in a case where a certain condition is fulfilled. The certain condition may be one of, a part of, or all of the following 1) to 9).
1) A plurality of waveforms are configured for DL.
2) A plurality of waveforms are configured for PDSCH.
3) A new or added DL waveform is configured.
4) A new or added PDSCH waveform is configured.
5) Dynamic DL waveform switching is configured or activated for the serving cell.
6) Dynamic DL waveform switching is configured or activated in one of the DCI formats for the serving cell.
7) Dynamic PDSCH waveform switching is configured or activated for the serving cell.
8) Dynamic PDSCH waveform switching is configured or activated in one of the DCI formats for the serving cell.
9) Reporting of CSI feedback based on a plurality of waveforms is explicitly configured or indicated by the base station 10 by using the RRC signaling, MAC-CE, or DCI, for example.

According to the above-described operation 3), the CQI feedback for a new or added DL waveform can be reported.

The following UE capabilities may be defined for each UE, each FR, each FC, etc., and may be reported from the UE to the base station 10.

- Capability indicating whether or not the CSI report for a new or added DL waveform or the CSI report based on the new or added DL waveform is supported. For example, the new or added DL waveform may be DFT-s-OFDM, enhanced DFT-s-OFDM, DFT-s-OTFS, SC-FDE, etc.
- Capability indicating whether or not separate CQI tables are supported for a new or added DL waveform.
- Capability indicating whether or not separate PMI codebook tables are supported for a new or added DL waveform.
- Capability indicating whether or not the CSI report for a DL waveform presented by the UE or the CSI report based on a DL waveform presented by the UE is supported.
- Capability indicating whether or not the CSI report for a DL waveform indicated or configured by the gNB or defined by the technical specification or a rule or the CSI report based on a DL waveform indicated or configured by the gNB or defined by the technical specification or a rule is supported.
- Capability indicating whether or not the CSI report for a plurality of DL waveforms or the CSI report based on a plurality of DL waveforms is supported.
- Capability indicating whether or not the CSI report including a plurality of CSI report type results for a plurality of DL waveforms or the CSI report including a plurality of CSI report type results based on a plurality of DL waveforms is supported.

According to the above-described embodiments, a method of performing the CSI feedback in a case where a plurality of waveforms are used can be specified.

In other words, the CSI (Channel State Information) feedback can be performed in a case where a plurality of waveforms are used in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

Fig. 6 is a drawing illustrating an example of a functional structure of a base station 10 according to an embodiment of the present invention. As shown in Fig. 6, the base station 10 includes a transmission unit 110, a reception unit 120, a configuration unit 130, and a control unit 140. The functional configuration illustrated in Fig. 6 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to the CSI report configuration.

The control unit 140 performs control related to a CSI report as described in an embodiment of the present invention. In addition, the control unit 140 performs scheduling. The functional units related to signal transmission in the control unit 140 may be included in the transmission unit 110, and the functional units related to signal reception in the control unit 140 may be included in the reception unit 120.

### <Terminal 20>

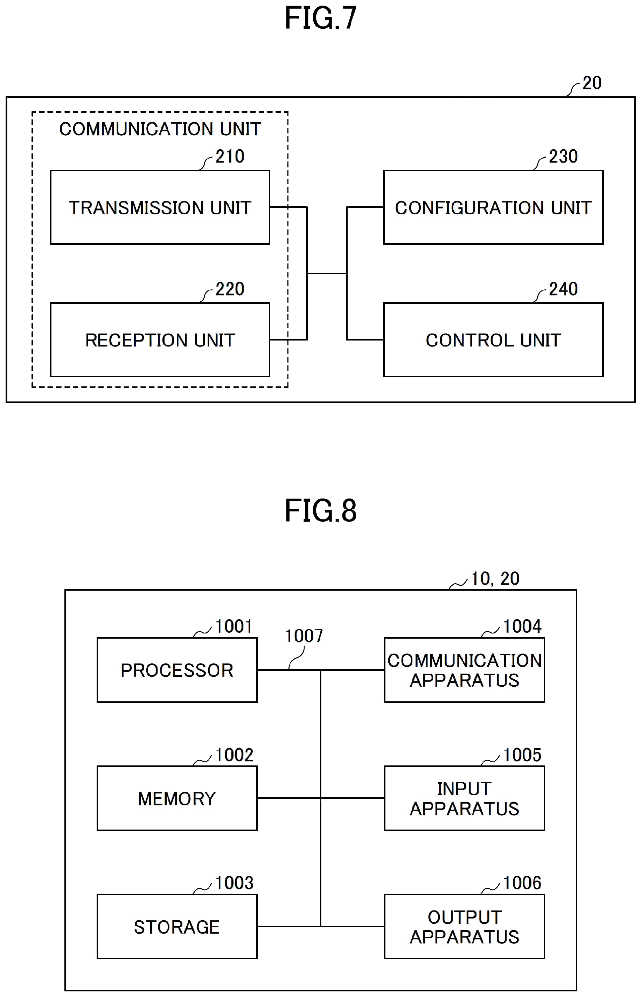

Fig. 7 is a drawing illustrating an example of a functional structure of a terminal 20 according to an embodiment of the present invention. As shown in Fig. 7, the terminal 20 includes a transmission unit 210, a reception unit 220, a configuration unit 230, and a control unit 240. The functional configuration illustrated in Fig. 7 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information items received by the reception unit 220 from the base station 10. In addition, the configuration unit 230 also stores pre-configured configuration information. Contents of the configuration information are, for example, information related to the CSI report configuration.

The control unit 240 performs control related to a CSI report as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 6 and Fig. 7) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

For example, the base station 10, the terminal 20, etc., according to an embodiment of the present disclosure may function as a computer for processing the radio communication method of the present disclosure. Fig. 8 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 or the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 6 may be implemented by control programs that are stored in the memory 1002 and that operate on the processor 1001. In addition, for example, the control unit 240 of the terminal 20 illustrated in Fig. 7 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (for example, a display, a speaker, an LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

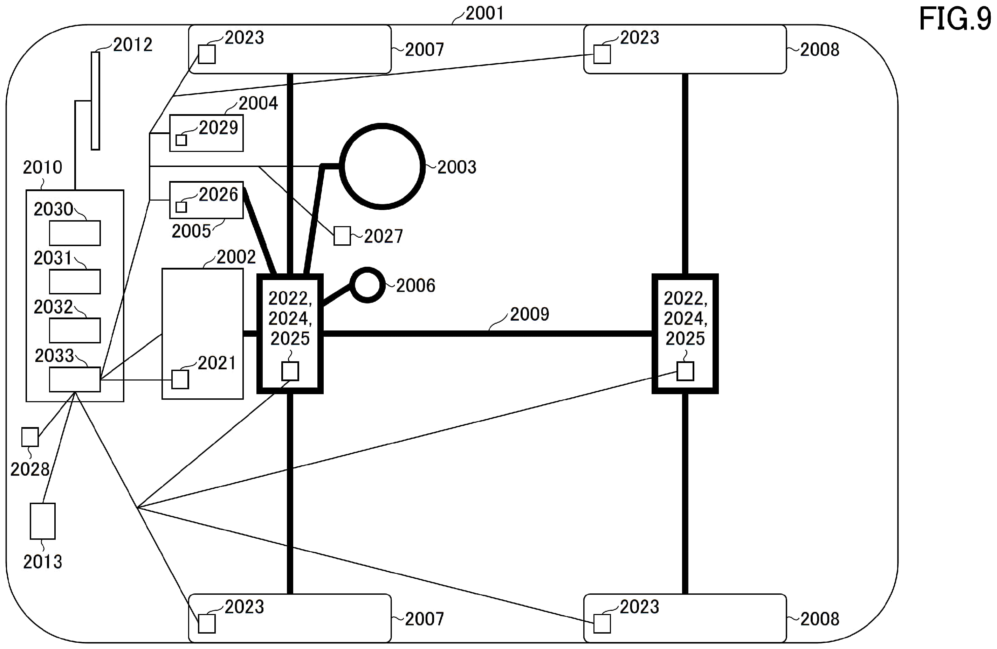

Fig. 9 shows an example of a configuration of a vehicle 2001. As shown in Fig. 9, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 can communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a reception unit configured to receive, from a base station, a downlink signal to which a plurality of waveforms can be applied; a control unit configured to measure the downlink signal, to determine a waveform to be applied to the downlink signal from among the plurality of waveforms, and to generate a CSI (Channel State Information) report; and a transmission unit configured to transmit the CSI report to the base station.

According to the above-described configuration, a method of performing the CSI feedback in a case where a plurality of waveforms are used can be specified. In other words, the CSI (Channel State Information) feedback can be performed in a case where a plurality of waveforms are used in the wireless communication system.

The control unit may generate a CSI report by using a different CQI (Channel quality indicator) table for each of the plurality of waveforms. According to the above-described configuration, a method of performing the CSI feedback in a case where a plurality of waveforms are used can be specified.

The control unit may determine a waveform to be applied to the downlink signal, based on a configuration related to the measurement. According to the above-described configuration, a method of performing the CSI feedback in a case where a plurality of waveforms are used can be specified.

The control unit may expect that a configuration related to the measurement can be applied to a waveform that is applied to the downlink signal. According to the above-described configuration, a method of performing the CSI feedback in a case where a plurality of waveforms are used can be specified.

The control unit may determine which waveform from among the plurality of waveforms is to be used for transmission of a CSI report related to the determined waveform, based on a result of the measurement of the downlink signal. According to the above-described configuration, a method of performing the CSI feedback in a case where a plurality of waveforms are used can be specified.

In addition, according to an embodiment of the present invention, a measurement method performed by a terminal is provided. The measurement method includes: receiving, from a base station, a downlink signal to which a plurality of waveforms can be applied; measuring the downlink signal, determining a waveform to be applied to the downlink signal from among the plurality of waveforms, and generating a CSI (Channel State Information) report; and transmitting the CSI report to the base station.

According to the above-described configuration, a method of performing the CSI feedback in a case where a plurality of waveforms are used can be specified. In other words, the CSI (Channel State Information) feedback can be performed in a case where a plurality of waveforms are used in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, radio resource control (RRC) signaling, medium access control (MAC) signaling), broadcast information (master information block (MIB), system information block (SIB)), and other signals or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, or a next generation system enhanced therefrom. In addition, a plurality of systems may be combined (for example, a combination of: at least one of LTE or LTE-A; 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a Boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station supports a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, terms such as "mobile station (MS)", "user terminal", "user equipment (UE)", "terminal", and the like, may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompass a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus

## Claims

1. A terminal comprising:
a reception unit configured to receive, from a base station, a downlink signal to which a plurality of waveforms can be applied;
a control unit configured to measure the downlink signal, to determine a waveform to be applied to the downlink signal from among the plurality of waveforms, and to generate a CSI (Channel State Information) report; and
a transmission unit configured to transmit the CSI report to the base station.

2. The terminal as claimed in claim 1, wherein
the control unit generates a CSI report by using a different CQI (Channel quality indicator) table for each of the plurality of waveforms.

3. The terminal as claimed in claim 1, wherein
the control unit determines a waveform to be applied to the downlink signal, based on a configuration related to the measurement.

4. The terminal as claimed in claim 1, wherein
the control unit expects that a configuration related to the measurement can be applied to a waveform that is applied to the downlink signal.

5. The terminal as claimed in claim 1, wherein
the control unit determines which waveform from among the plurality of waveforms is to be used for transmission of a CSI report related to the determined waveform, based on a result of the measurement of the downlink signal.

6. A measurement method performed by a terminal, the measurement method comprising:
receiving, from a base station, a downlink signal to which a plurality of waveforms can be applied;
measuring the downlink signal, determining a waveform to be applied to the downlink signal from among the plurality of waveforms, and generating a CSI (Channel State Information) report; and
transmitting the CSI report to the base station.
